# EUROPEAN PATENT APPLICATION

(11) **EP 3 506 093 A1**
(43) Date of publication of application: **03.07.2019**
(21) Application number: 17848107.3
(22) Date of filing: 05.09.2017
(51) Int. Cl.: G06F 9/48

(54) **APPLICATION PROCESS MANAGEMENT METHOD AND TERMINAL DEVICE**

(30) Priority: 09.09.2016 CN 201610815139
(71) Applicant: Huawei Technologies Co., Ltd., Longgang District Shenzhen, Guangdong 518129 (CN)
(72) Inventor: CHEN, Qiulin, Shenzhen Guangdong 518129 (CN); LAI, Jun, Shenzhen Guangdong 518129 (CN); YING, Yunjian, Shenzhen Guangdong 518129 (CN)
(74) Representative: Kreuz, Georg Maria
(86) International application number: PCT/CN2017/100444
(87) International publication number: WO 2018/045934

(57) **Abstract**

An application process management method and a terminal device are disclosed. The method includes: starting an application on a terminal device (410); and updating a group status of a process of the application when an event that the application switches from the foreground to the background occurs, so that at least some of target processes of the application are transferred from a foreground process group to a background process group (420), where the target process is a process that still meets, after the application switches to the background, a condition for staying in the foreground process group. The method can mitigate frame freezing of a foreground application.

## Description

This application claims priority to Chinese Patent Application No. 201610815139.0, filed with the Chinese Patent Office on September 9, 2016 and entitled "APPLICATION PROCESS MANAGEMENT METHOD AND TERMINAL DEVICE", which is incorporated herein by reference in its entirety.

### TECHNICAL FIELD

This application relates to the field of terminal devices, and more specifically, to an application process management method and a terminal device.

### BACKGROUND

With an increase in types of applications on terminal devices, the terminal devices are more widely used. There are a plurality of operating systems for the terminal devices. A Linux-based Android system is an operating system most commonly used for the terminal devices.

The Android system is a multitasking operating system. When an application switches from the foreground to the background, a process of the background application still keeps running. As a result, the process of the background application contends for a processor resource with a process of a foreground application, causing frequent frame freezing for the foreground application.

To mitigate the problem that a foreground application encounters frame freezing because a background application contends for a processing resource with the foreground application, Google proposes a cgroup (namely, control group, also referred to as a control group)-based foreground-background mechanism. A main idea of the cgroup-based foreground-background mechanism is grouping processes of foreground applications into a foreground process group (fore group, fg) as more as possible, and allocating more processing resources to the processes in the foreground process group; and grouping processes of background applications into a background process group (back group, bg) as more as possible, and allocating fewer processing resources to the processes in the background process group. For example, the processes in the foreground process group can use all processor cores, and can occupy 95% of usage of a processor; and the processes in the background process group can use only one processor core, and can occupy a maximum of 5% of the usage of the processor. In this resource allocation manner, the problem that a background application process preempts a processing resource of a foreground application process can be mitigated to a great extent.

However, even though the cgroup-based foreground-background mechanism is used, a foreground application still encounters frame freezing when a relatively large quantity of applications simultaneously run.

### SUMMARY

This application provides an application process management method and a terminal device, to mitigate frame freezing of a foreground application.

According to a first aspect, an application process management method is provided, including: starting an application on a terminal device; and updating a group status of a process of the application when an event that the application switches from the foreground to the background occurs, so that at least some of target processes of the application are transferred from a foreground process group to a background process group, where the target process is a process that still meets, after the application switches to the background, a condition for staying in the foreground process group.

The target process is the process that still meets, after the application switches to the background, the condition for staying in the foreground process group. If the prior art is used, the target process stays in the foreground process group and contends for a resource with a foreground process. In this solution, the group status of the process of the application is updated when the event that the application switches from the foreground to the background occurs, so that the at least some of the target processes of the application are transferred from the foreground process group to the background process group. This can reduce, to some extent, a quantity of processes that contend for a resource with a foreground process, thereby mitigating system frame freezing.

The condition for staying in the foreground process group that is met by the target process after the application switches to the background includes at least one of the following conditions: The target process is a fork child process of the process of the application; the target process has a foreground service; and the target process has an associated process, where a previous group of a current group of the associated process is the foreground process group.

It should be understood that the fork child process of the process of the application may be a child process created by the process of the application by using a fork() function.

It should be understood that the updating a group status of a process of the application when an event that the application switches from the foreground to the background occurs may be: updating the group status of the process of the application by using, as a trigger event, the event that the application switches from the foreground to the background, in other words, updating the group status of the process of the application in response to the event that the application switches from the foreground to the background.

It should be understood that the group status of the process is continuously updated inside the terminal device by using an AMS. When the event that the application switches from the foreground to the background occurs, a group status of a process controlled by the AMS is updated from a previous group to a current group. Certainly, the previous group and the current group of the process may be a same group, or may be different groups. Therefore, the previous group of the associated process may be a group to which the associated process belongs before the AMS updates a group status of the associated process for the last time, and the current group of the associated process may be a group to which the associated process belongs after the AMS updates the group status of the associated process for the last time. The previous group and the current group of the associated process may be the same, or may be different.

With reference to the first aspect, in a first implementation of the first aspect, the target process includes at least one of the following processes: a fork child process of the process of the application; a process having an associated process, where a previous group of a current group of the associated process is the foreground process group; and a process that is forcibly set to be in the foreground.

With reference to either the first aspect or the foregoing implementation of the first aspect, in a second implementation of the first aspect, the target process includes the fork child process of the process of the application, and the updating a group status of a process of the application includes: identifying the fork child process from a plurality of processes of the application; and updating a group status of the fork child process, so that the group status of the fork child process is kept consistent with a group status of a parent process of the fork child process.

In the prior art, an AMS can control only a process created by a zygote (the zygote is a process used to create a process, and may be referred to as an incubation process), and cannot control a fork child process of an application process. If the fork child process of the application process is in a foreground process group, the fork child process always stays in the foreground process group and contends for a resource with a process of a foreground application. In this solution, the group status of the fork child process is updated based on the group status of the parent process of the fork child process, so that the group status of the fork child process is kept consistent with the group status of the parent process of the fork child process. This ensures that the group status of the fork child process can be updated in real time, so that the fork child process does not always stay in the foreground process group. Further, the group status of the fork child process is kept consistent with the group status of the parent process of the fork child process, thereby facilitating resource sharing between the fork child process and the parent process.

With reference to the second implementation of the first aspect, in a third implementation of the first aspect, the identifying the fork child process from a plurality of processes of the application includes: searching cgroup.procs files of the plurality of processes for the fork child process, where the cgroup.procs files of the plurality of processes record a process identifier of the fork child process.

With reference to the third implementation of the first aspect, in a fourth implementation of the first aspect, before the searching cgroup.procs files of the plurality of processes for the fork child process, the method further includes: determining a user identifier of the application based on a process identifier of a main process of the application; querying for process identifiers of the plurality of processes based on the user identifier of the application; and determining paths to the cgroup.procs files of the plurality of processes based on the user identifier of the application and the process identifiers of the plurality of processes.

With reference to any one of the first aspect or the foregoing implementations of the first aspect, in a fifth implementation of the first aspect, the updating a group status of a process of the application includes: determining an associated process of a to-be-grouped current process of the application; and adding the current process to the foreground process group when a current group of the associated process is the foreground process group; or adding the current process to the background process group when a current group of the associated process is the background process group.

In the prior art, a group status of the current process is updated based on a previous group of the current group of the associated process. A specific update manner is setting a current group of the current processto the previous group of the associated process to . If the group status of the current process is updated in the manner in the prior art, the following problem is caused: Assuming that an application switches from the foreground to the background, a current group of a process of the application is updated. An update result may be a foreground process group, or may be a background process group. However, because the application is previously in the foreground, previous groups of current groups of all processes of the application are the foreground process group. In this case, if the processing manner in the prior art is used, regardless of whether the current group of the process of the application is updated to the foreground process group or the background process group, all processes associated with the process of the application stay in the foreground process group. In this solution, the group status of the current process is updated based on the current group of the associated process, so that a group of the current process is kept consistent with the current group of the associated process of the current process. This can avoid the foregoing problem, so that even though the application switches from the foreground to the background, there is also a possibility that the process associated with the process of the application enters the background process group.

With reference to any one of the first aspect or the foregoing implementations of the first aspect, in a sixth implementation of the first aspect, the updating a group status of a process of the application includes: when a to-be-grouped current process of the application does not include an activity in a visible state or a paused state, updating a group status of the current process depending on whether the current process is forcibly set to be in the foreground; and adding the current process to the foreground process group if the current process is forcibly set to be in the foreground; or adding the current process to the background process group if the current process is not forcibly set to be in the foreground.

In the prior art, when the current process does not include an activity in a visible state or a paused state, the group status of the current process needs to be updated depending on whether the current process has a foreground service. If the current process has a foreground service, the current process is added to the foreground process group and a group status update procedure of the current process is exited. If the current process does not have a foreground service, the current process is added to the background process group, and the group status of the current process continues to be updated depending on whether the current process is forcibly set to be in the foreground. In this update manner, all processes having foreground services stay in the foreground process group and contend for a resource with a foreground process, causing system frame freezing. In this solution, the group status of the current process does not need to be updated depending on whether the current process has a foreground service, so that the current process does not stay in the foreground process group even if the current process has a foreground service. This mitigates system frame freezing to some extent.

According to a second aspect, an application process management method is provided, including: identifying a fork child process of a process of an application from a plurality of processes of the application; and updating a group status of the fork child process, so that the group status of the fork child process is kept consistent with a group status of a parent process of the fork child process.

In the prior art, an AMS cannot control a fork child process of an application process. If the fork child process of the application process is in a foreground process group, the fork child process always stays in the foreground process group and contends for a resource with a process of a foreground application. In this solution, the group status of the fork child process is updated based on the group status of the parent process of the fork child process, so that the group status of the fork child process is kept consistent with the group status of the parent process of the fork child process. This ensures that the group status of the fork child process can be updated in real time, so that the fork child process does not always stay in the foreground process group. Further, the group status of the fork child process is kept consistent with the group status of the parent process of the fork child process, thereby facilitating resource sharing between the fork child process and the parent process.

With reference to the second aspect, in some implementations of the second aspect, the identifying the fork child process from a plurality of processes of the application includes: searching cgroup.procs files of the plurality of processes for the fork child process, where the cgroup.procs files of the plurality of processes record a process identifier of the fork child process.

With reference to the second aspect, in some implementations of the second aspect, before the searching cgroup.procs files of the plurality of processes for the fork child process, the method further includes: determining a user identifier of the application based on a process identifier of a main process of the application; querying for process identifiers of the plurality of processes based on the user identifier of the application; and determining paths to the cgroup.procs files of the plurality of processes based on the user identifier of the application and the process identifiers of the plurality of processes.

According to a third aspect, an application process management method is provided, including: starting an application on a terminal device; determining an associated process of a to-be-grouped current process of the application when an event that the application switches from the foreground to the background occurs; and adding the current process to a foreground process group when a current group of the associated process is the foreground process group; or adding the current process to a background process group when a current group of the associated process is the background process group.

In the prior art, a group status of the current process is updated based on a previous group of the current group of the associated process. A specific update manner is setting a current group of the current process to the previous group of the associated process. If the group status of the current process is updated in the manner in the prior art, the following problem is caused: Assuming that an application switches from the foreground to the background, a current group of a process of the application is updated. An update result may be a foreground process group, or may be a background process group. However, because the application is previously in the foreground, previous groups of current groups of all processes of the application are the foreground process group. In this case, if the processing manner in the prior art is used, regardless of whether the current group of the process of the application is updated to the foreground process group or the background process group, all processes associated with the process of the application stay in the foreground process group. In this solution, the group status of the current process is updated based on the current group of the associated process, so that a group of the current process is kept consistent with the current group of the associated process of the current process. This can avoid the foregoing problem, so that even though the application switches from the foreground to the background, there is also a possibility that the process associated with the process of the application enters the background process group.

According to a fourth aspect, an application process management method is provided, including: starting an application on a terminal device; when an event that the application switches from the foreground to the background occurs, if a to-be-grouped current process of the application does not include an activity in a visible state or a paused state, updating a group status of the current process depending on whether the current process is forcibly set to be in the foreground; and adding the current process to a foreground process group if the current process is forcibly set to be in the foreground; or adding the current process to a background process group if the current process is not forcibly set to be in the foreground.

In the prior art, when the current process does not include an activity in a visible state or a paused state, the group status of the current process needs to be updated depending on whether the current process has a foreground service. If the current process has a foreground service, the current process is added to the foreground process group and a group status update procedure of the current process is exited. If the current process does not have a foreground service, the current process is added to the background process group, and the group status of the current process continues to be updated depending on whether the current process is forcibly set to be in the foreground. In this update manner, all processes having foreground services stay in the foreground process group and contend for a resource with a foreground process, causing system frame freezing. In this solution, the group status of the current process does not need to be updated depending on whether the current process has a foreground service, so that the current process does not stay in the foreground process group even if the current process has a foreground service. This mitigates system frame freezing to some extent.

According to a fifth aspect, a terminal device is provided, including units configured to perform the method described in any one of the first aspect to the fourth aspect.

According to a sixth aspect, a terminal device is provided, including a storage and a processor. The storage is configured to store a program. The processor is configured to execute the program. When the program is executed, the processor is specifically configured to perform the method described in any one of the first aspect to the fourth aspect.

According to a seventh aspect, a computer readable medium is provided. The computer readable medium is configured to store program code. The program code includes an instruction used to perform the method described in any one of the first aspect to the fourth aspect.

### BRIEF DESCRIPTION OF DRAWINGS

FIG. 1 is a flowchart of an existing AMS control procedure;
FIG. 2 is a framework diagram of a terminal device according to an embodiment of this application;
FIG. 3A and FIG. 3B are a framework diagram of a computer system according to an embodiment of this application;
FIG. 4 is a schematic flowchart of an application process management method according to an embodiment of this application;
FIG. 5 is a detailed flowchart of step 420 in FIG. 4;
FIG. 6A and FIG. 6B are a schematic flowchart of an application process management method according to an embodiment of this application;
FIG. 7 is a schematic structural diagram of a terminal device according to an embodiment of this application; and
FIG. 8 is a schematic structural diagram of a terminal device according to another embodiment of this application.

### DESCRIPTION OF EMBODIMENTS

An application process management method provided in the embodiments of this application is mainly applied to a terminal device. The terminal device may also be referred to as user equipment (User Equipment, UE), a mobile station (Mobile Station, MS), a mobile terminal (Mobile Terminal), or the like. Optionally, the terminal may have a capability of communicating with one or more core networks by using a radio access network (Radio Access Network, RAN). For example, the terminal may be a mobile phone (or referred to as a "cellular" phone), or a computer having a mobility property. For example, the terminal may alternatively be a portable, pocket-sized, handheld, computer built-in, or in-vehicle mobile apparatus. It should be understood that, in addition to the terminal device, the application process management method provided in the embodiments of this application may also be applied to another type of computer system.

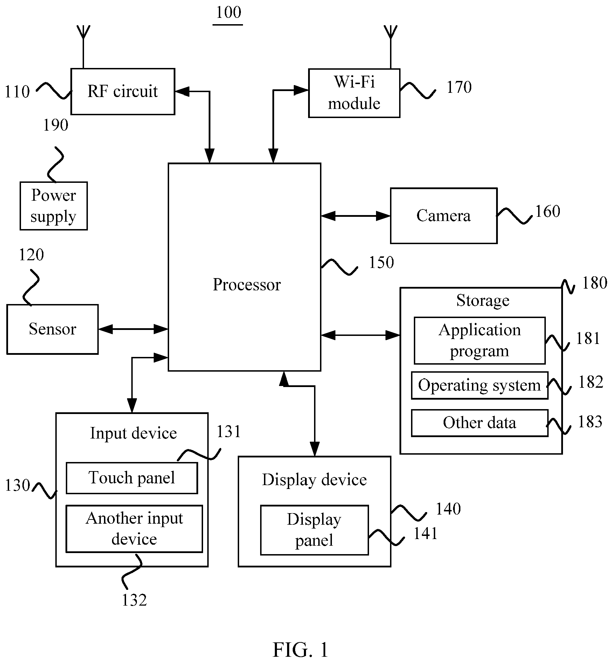

Referring to FIG. 1, FIG. 1 is a schematic structural diagram of a terminal device to which the embodiments of this application are applied. As shown in FIG. 1, the terminal device 100 includes a storage 180, a processor 150, and a display device 140. The storage 180 stores a computer program, and the computer program includes an operating system 182, an application program 181, and the like. The processor 150 is configured to read the computer program in the storage 180, and then perform a method defined by the computer program. For example, the processor 150 reads the operating system program 182, to run an operating system on the terminal device 100 and implement various functions of the operating system; or reads one or more application programs 181, to run an application on the terminal device.

The processor 150 may include one or more processors. For example, the processor 150 may include one or more central processing units, or include one central processing unit and one graphics processing unit. When the processor 150 includes a plurality of processors, the plurality of processors may be integrated on one chip, or may be independent chips. One processor may include one or more processing cores.

In addition, the storage 180 further stores other data 183 in addition to the computer program. The other data 183 may include data generated after the operating system 182 or the application program 181 runs. The data includes system data (for example, a configuration parameter of the operating system) and user data.

The storage 180 usually includes a memory and an external storage. The memory may be a random access memory (RAM), a read-only memory (ROM), a cache (CACHE), or the like. The external storage may be a hard disk, an optical disc, a USB flash drive, a floppy disk, a tape drive, or the like. The computer program is usually stored in the external storage, and before performing processing, the processor loads the computer program from the external storage to the memory.

The operating system program 182 includes a computer program that can implement the application process management method provided in the embodiments of this application, so that after the processor 150 reads the operating system program 182 and runs the operating system, the operating system can have a function of implementing the application process management method provided in the embodiments of this application.

The terminal device 100 may further include an input device 130, configured to: receive entered digital information or character information, or a contact touch operation/noncontact gesture; and generate signal input and the like that are related to user setting and function control of the terminal device 100. Specifically, in this embodiment of this application, the input device 130 may include a touch panel 131. The touch panel 131 is also referred to as a touchscreen, and may collect a touch operation of a user on or near the touch panel (for example, an operation performed by the user on or near the touch panel 131 by using any proper object or accessory such as a finger or a stylus), and drive a corresponding connection apparatus based on a preset program. Optionally, the touch panel 131 may include two parts: a touch detection apparatus and a touch controller. The touch detection apparatus detects a touch position of the user, detects a signal brought by a touch operation, and transmits the signal to the touch controller. The touch controller receives touch information from the touch detection apparatus, converts the touch information into contact coordinates, and sends the contact coordinates to the processor 150; and can receive and execute a command sent by the processor 150.

The touch panel 131 may be implemented in a plurality of types such as a resistive type, a capacitive type, an infrared type, and a surface acoustic wave type. In addition to the touch panel 131, the input device 130 may further include another input device 132. The another input device 132 may include but is not limited to one or more of a physical keyboard, a function key (for example, a volume control key or an on/off key), a trackball, a mouse, a joystick, and the like.

The terminal device 100 may further include the display device 140. The display device 140 includes a display panel 141, configured to display information entered by a user or information provided for a user, various menu interfaces of the terminal device 100, and the like. In this embodiment of this application, the display panel 141 is mainly configured to display an application process in the foreground or a desktop of the terminal device. The display device 140 may include the display panel 141. Optionally, the display panel 141 may be configured in a form of an LCD (Liquid Crystal Display, liquid crystal display), an OLED (Organic Light-Emitting Diode, organic light-emitting diode), or the like. In some other embodiments, the touch panel 131 may cover the display panel 141 to form a touch display screen.

In addition to the foregoing components, the terminal device 100 may further include a power supply 190 configured to supply power to another module, and a camera 160 configured to take a photo or a video. The terminal device 100 may further include one or more sensors 120, such as an acceleration sensor and an optical sensor. The terminal device 100 may further include a radio frequency (Radio Frequency, RF) circuit 110, configured to perform network communication with a wireless network device, and may further include a Wi-Fi module 170, configured to perform Wi-Fi communication with another device.

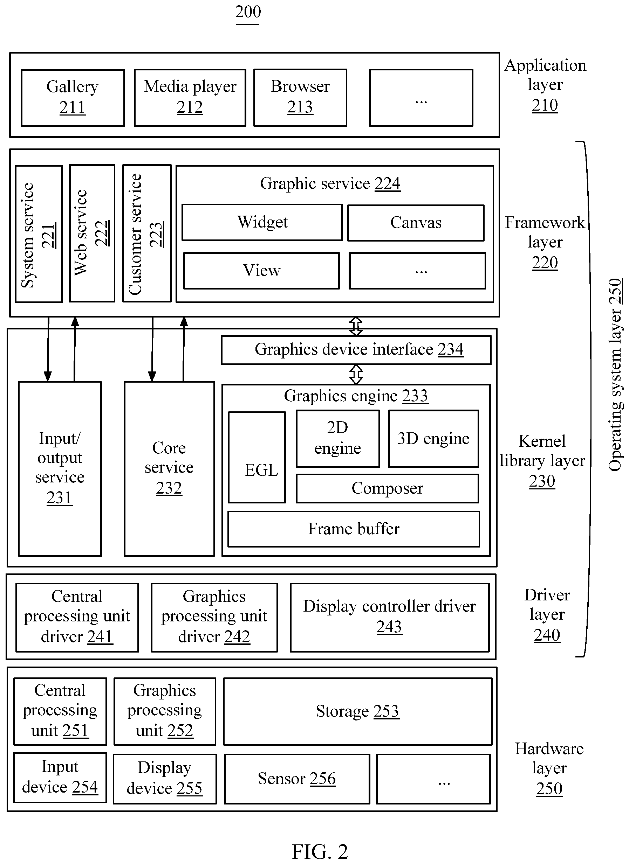

The application process management method provided in the embodiments of this application may be implemented in the operating system 182 shown in FIG. 1. The operating system may be an Android operating system. With reference to FIG. 2, the following uses the Android operating system as an example to describe an implementation location of the method provided in the embodiments of this application.

Referring to FIG. 2, FIG. 2 is a schematic structural diagram of a computer system 200 according to an embodiment of this application. The computer system may be a terminal device, and includes an application layer 210 and an operating system layer 250. The operating system may be an Android operating system. The operating system layer 250 is further divided into a framework layer 220, a kernel library layer 230, and a driver layer 240. The operating system layer 250 in FIG. 2 may be considered as a specific implementation of the operating system 182 in FIG. 1. The application layer 210 in FIG. 2 may be considered as a specific implementation of the application program 181 in FIG. 1. The driver layer 240 includes a CPU driver 241, a GPU driver 242, a display controller driver 243, and the like. The kernel library layer 230 is a core part of the operating system, and includes an input/output service 231, a core service 232, a graphics device interface 234, a graphics engine (Graphics Engine) 233 that implements graphics processing for a CPU or a GPU, and the like. The graphics engine 233 may include a 2D engine, a 3D engine, a composer (Composer), a frame buffer (Frame Buffer), an EGL (Embedded-System Graphics Library), and the like. The EGL is an interface between a rendering API and an underlying raw platform window system. The API is an application programming interface (Application Programming Interface). The framework layer 220 may include a graphic service (Graphic Service) 224, a system service (System service) 221, a web service (Web Service) 222, a customer service (Customer Service) 223, and the like. The graphic service 224 may include a widget (Widget), a canvas (Canvas), a view (View), and the like. The application layer 210 may include a gallery 211, a media player (Media Player) 212, a browser (Browser) 213, and the like.

In addition, the computer system 200 further includes a hardware layer 250 under the driver layer 240. The hardware layer of the computer system 200 may include a central processing unit (Central Processing Unit, CPU) 251 and a graphics processing unit (Graphics Processing Unit, GPU) 252 (equivalent to a specific implementation of the processor 150 in FIG. 1); may further include a storage 253 (equivalent to the storage 180 in FIG. 1), including a memory and an external storage; may further include an input device 254 (equivalent to the input device 132 in FIG. 1), and a display device 255 (equivalent to the display device 140 in FIG. 1), such as a liquid crystal display (Liquid Crystal Display, LCD), a holographic (Holographic) device, or a projector (Projector); and may further include one or more sensors 256 (equivalent to the sensor 120 in FIG. 1). Certainly, in addition, the hardware layer 250 may further include the power supply, the camera, the RF circuit, and the Wi-Fi module that are shown in FIG. 1, and may further include other hardware modules that are not shown in FIG. 1 either, such as a memory controller and a display controller.

The application process management method provided in the embodiments of this application may be implemented at the operating system execution layer 250 in FIG. 2.

As described above, to mitigate frame freezing of a foreground application, a cgroup-based foreground-background mechanism is used in the prior art. However, even though the foreground-background mechanism is used, a foreground application still encounters frame freezing when a relatively large quantity of applications simultaneously run. Through research, it is found that this frame freezing phenomenon occurs because after an application switches to the background, some processes of the application still meet a condition for staying in a foreground process group. In other words, in the prior art, even though the application switches to the background, because some processes still meet the condition for staying in the foreground process group, the processes stay in the foreground process group and contend for a resource with a process of a foreground application, causing frame freezing for the foreground application.

For ease of description, "a process that still meets, after an application switches to the background, a condition for staying in a foreground process group" is referred to as a target process of the application below. It should be noted that a type of the target process is not specifically limited in the embodiments of this application. The following provides descriptions by using examples.

In some embodiments, the target process may include a process that is not controlled by an activity manager service (Activity Manager Service, AMS), for example, a fork child process of an application process. The following analyzes a reason why this type of process stays in the foreground process group after the application switches to the background. The AMS is an important component of an operating system, and mainly provides the following functions: centrally scheduling activities (Activity) of applications, performing memory management, and performing process management. The AMS is a part of the system service 221 in FIG. 2.

The cgroup-based foreground-background group mechanism is performed under control of the AMS. To be specific, the AMS updates a group status of a process. However, the AMS can control only a process created by a zygote (the zygote is a process used to create a process, and may be referred to as an incubation process). A fork child process (namely, a child process created by an application process in a fork manner, or a child process generated by an application by calling fork()) of an application process is not controlled by the AMS. In this case, a group status of the fork child process of the application process cannot be updated, and consequently some fork child processes always stay in the foreground process group.

In some embodiments, the target process may include a process controlled by the AMS, for example, a process having a foreground service or a process that is forcibly set to be in the foreground.

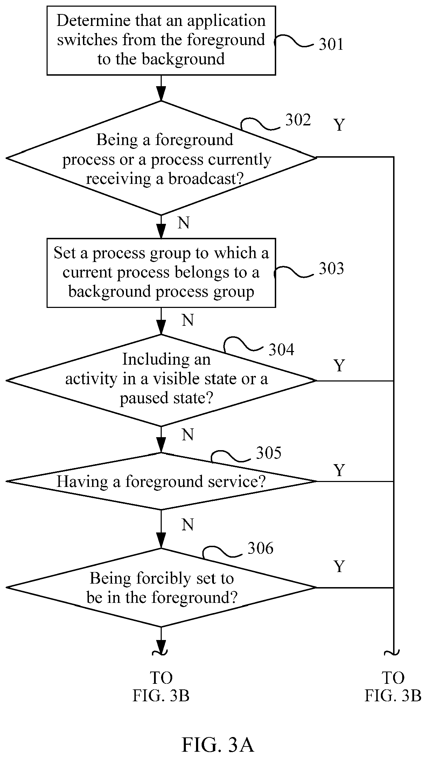

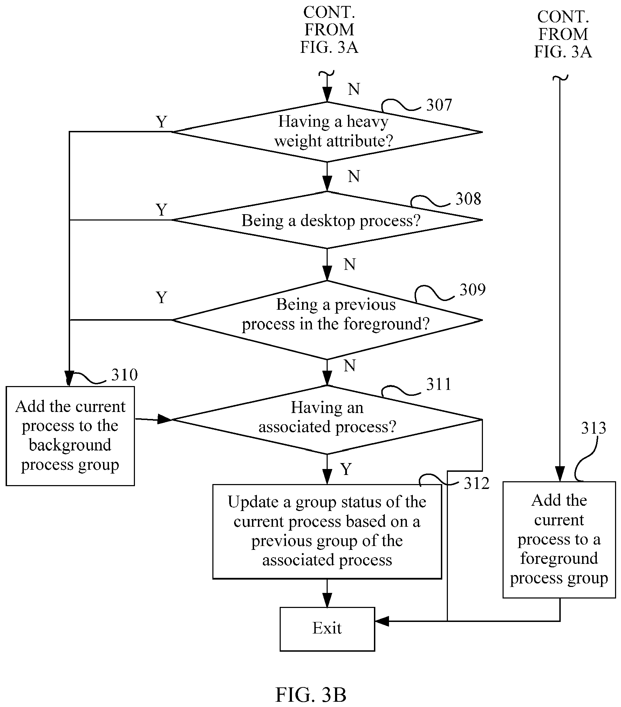

Specifically, in an existing AMS control procedure, when an event that an application switches from the foreground to the background occurs, an AMS updates, based on a specific condition and logic, a group status of a process controlled by the AMS. In other words, when the event that the application switches from the foreground to the background occurs, a process meeting some conditions enters a background process group as the application switches to the background, but a process meeting some conditions, for example, the above-described process having a foreground service, stays in a foreground process group. For ease of understanding, the existing AMS control procedure is first described with reference to FIG. 3A and FIG. 3B.

FIG. 3A and FIG. 3B are a flowchart of an existing AMS control procedure. An AMS updates a group status of a process controlled by the AMS based on the control procedure shown in FIG. 3A and FIG. 3B.

301. Determine that an application switches from the foreground to the background.

It should be understood that, in addition to an event that an application switches from the foreground to the background, many other events may trigger the AMS control procedure, such as an application start event, an event that an application switches from the background to the foreground, and an event that a process receives a broadcast.

302. Determine whether a current process is a foreground process or a process currently receiving a broadcast.

If the current process is a foreground process or a process currently receiving a broadcast, step 313 is performed to add the current process to a foreground process group and a group status update procedure of the current process is exited; or if the current process is neither a foreground process nor a process currently receiving a broadcast, step 303 is performed.

It should be understood that, when an event corresponding to step 301 occurs, a process group of a process controlled by the AMS is usually updated based on the procedure shown in FIG. 3A and FIG. 3B. The current process in step 302 is a process that is of a terminal device and that is controlled by the AMS, and a group status of the process is being updated by using the procedure in FIG. 3A and FIG. 3B.

303. Set a process group to which the current process belongs to a background process group.

304. Determine whether the current process includes an activity in a visible state or a paused state.

An Android system defines four components: an activity (activity), a service (service), a content provider (content provider), and a broadcast receiver (broadcast receiver).

The activity is usually an independent window, and activities communicate with each other through the Internet. Further, the activity usually includes four basic states: an active or running (active or running) state, a paused (paused) state, a stop (stop) state, and a killed (killed) state.

In step 304, if the current process includes an activity in a visible state or a paused state, step 313 is performed to add the current process to the foreground process group and the group status update procedure of the current process is exited (in other words, the group status update procedure of the current process ends); or if the current process does not include an activity in a visible state or a paused state, step 305 is performed.

305. Determine whether the current process has a foreground service.

A service is usually a program that has a long life cycle and that has no user interface. The program usually runs in the background. A service in the background has a low priority, and may be killed. Therefore, some applications enable, by using a startForeground function, a service to run in the foreground.

If the current process has a foreground service, step 313 is performed to add the current process to the foreground process group and the group status update procedure of the current process is exited; or if the current process does not have a foreground service, step 306 is performed.

306. Determine whether the current process is forcibly set to be in the foreground.

To ensure that some processes of some applications are not killed, the applications forcibly set these processes to be in the foreground by using a setProcessForeground function. If the current process is forcibly set to be in the foreground, step 313 is performed to add the current process to the foreground process group and the group status update procedure of the current process is exited; or if the current process is not forcibly set to be in the foreground, step 307 is performed.

307. Determine whether the current process has a heavy weight attribute (heavy weight attribute).

A process having a heavy weight attribute is not easily killed even if the process is placed in the background. Therefore, in step 307, if the process has a heavy weight attribute, step 310 is performed to add the process to the background process group; or if the process does not have a heavy weight attribute, step 308 is performed.

308. Determine whether the current process is a desktop process.

If the current process is a desktop process, step 310 is performed to add the current process to the background process group; or if the current process is not a desktop process, step 309 is performed.

309. Determine whether the current process is a process of a previous application in the foreground.

If the current process is a process of a previous application in the foreground, step 310 is performed to add the current process to the background process group; or if the current process is not a process of a previous application in the foreground, step 311 is performed. It should be understood that an application in the foreground continuously varies depending on a user operation. For example, a user first starts an application A, and in this case, the application A is in the foreground; next, the user starts an application B, and in this case, the application B becomes a foreground application, and the application A becomes a previous application in the foreground; next, if the user presses a HOME button to enable the application B to switch from the foreground to the background, the application B becomes a previous application in the foreground.

310. Add the current process to the background process group.

311. Determine whether the current process has an associated process.

Specifically, whether the current process has an associated process may be determined by determining whether the current process has a currently-running service or content provider (the content provider may provide a specified data set of an application program for another application to use, in other words, the content provider may implement data sharing between applications).

If the current process has a currently-running service or content provider, it indicates that the current process has an associated process, and step 312 is performed; otherwise, the group status update procedure of the current process is directly exited.

312. Update a group status of the current process based on a previous group of the associated process.

Specifically, assuming that the previous group of the associated process is the foreground process group, the current process is added to the foreground process group; or assuming that the previous group of the associated process is the background process group, the current process is added to the background process group. In other words, a current group of the current process is kept consistent with the previous group of the associated process.

It should be understood that a group status of a process is continuously updated inside the terminal device by using the AMS. When the event that the application switches from the foreground to the background occurs, the group status of the process controlled by the AMS is updated from a previous group to a current group. Certainly, the previous group and the current group of the process may be a same group, or may be different groups. Therefore, the previous group of the associated process may be a group to which the associated process belongs before the AMS updates a group status of the associated process for the last time, and a current group of the associated process may be a group to which the associated process belongs after the AMS updates the group status of the associated process for the last time. The previous group and the current group of the associated process may be the same, or may be different.

313. Add the current process to a foreground process group.

From the procedure in FIG. 3A and FIG. 3B, it can be learned that, after the application switches to the background, some processes of the application that are controlled by the AMS stay in the foreground process group because the processes meet some conditions in the procedure in FIG. 3A and FIG. 3B. A target process in this embodiment of this application may include a target process of this type. For example, the target process may include at least one of the following processes: a process having an associated process, where a previous group of a current group of the associated process is the foreground process group; a process having a foreground service; and a process that is forcibly set to be in the foreground.

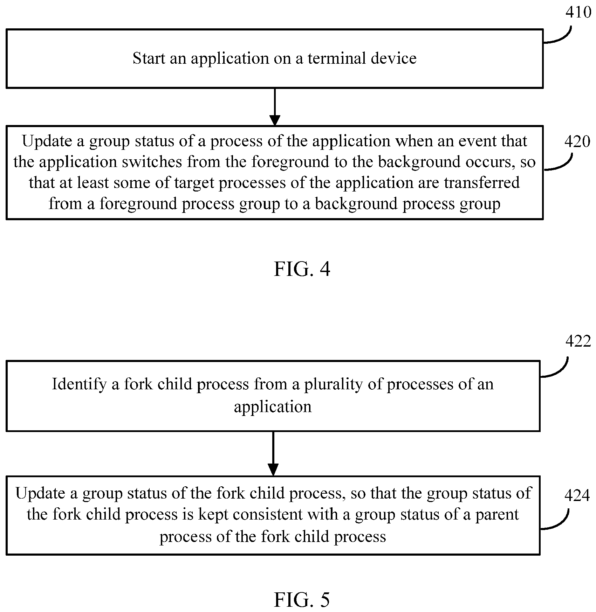

To mitigate a phenomenon that a process of a background application contends for a resource with a process of a foreground application, when an event that an application switches from the foreground to the background occurs, some or all of target processes may be set to be in a background process group in a specific manner. The following describes in detail an application process management method in an embodiment of this application with reference to FIG. 4.

FIG. 4 is a schematic flowchart of an application process management method according to an embodiment of this application. The method in FIG. 4 may be performed by a terminal device, and specifically, may be performed by an operating system of the terminal device, for example, the operating system layer 250 in FIG. 2. The method in FIG. 4 includes the following steps.

410. Start an application on a terminal device.

Specifically, the application (APP) may be an application currently running on the terminal device. For example, the application may be a currently started shopping application, music application, or social networking application on the terminal device.

420. Update a group status of a process of the application when an event that the application switches from the foreground to the background occurs, so that at least some of target processes of the application are transferred from a foreground process group to a background process group.

As described above, the target process is a process that still meets, after the application switches to the background, a condition for staying in the foreground process group. If the prior art is used, the target process stays in the foreground process group and contends for a resource with a foreground process. In this embodiment of this application, the group status of the process of the application is updated when the event that the application switches from the foreground to the background occurs, so that the at least some of the target processes of the application are transferred from the foreground process group to the background process group. This can mitigate, to some extent, a phenomenon that the target process contends for a resource with a foreground process.

It should be noted that the target process may include a process that is not controlled by an AMS, for example, a fork child process of the process of the application. Alternatively, the target process may include a process controlled by an AMS, for example, a process that is of the application and that has an associated process, where a previous group of a current group of the associated process is the foreground process group; a process that is of the application and that has a foreground service; or a process that is of the application and that is forcibly set to be in the foreground. Different types of target processes may be corresponding to different execution manners of step 420. The following provides detailed descriptions with reference to specific embodiments.

Optionally, in some embodiments, the target process includes the fork child process of the process of the application, and step 420 may include: identifying the fork child process of the process of the application from a plurality of processes of the application; and setting a process group to which the fork child process belongs to the background process group.

For example, the application includes a process 1, a process 2, a process 3, and a process 4, and the process 2 and the process 3 are identified fork child processes. In this case, process groups to which the process 1 and the process 4 belong may be updated based on the AMS, and process groups to which the process 2 and the process 3 belong may be directly set to the background process group.

In this embodiment of this application, the identified fork child process is directly transferred to the background process group. The operation is simple and easy to implement.

Optionally, in some other embodiments, as shown in FIG. 5, the target process includes the fork child process (fork child process) of the process of the application, and step 420 may include the following steps:
422. Identify a fork child process of the process of the application from a plurality of processes of the application.
424. Update a group status of the fork child process, so that the group status of the fork child process is kept consistent with a group status of a parent process of the fork child process.

In this embodiment of this application, the group status of the fork child process is updated based on the group status of the parent process of the fork child process, so that the group status of the fork child process is kept consistent with the group status of the parent process of the fork child process. This ensures that the group status of the fork child process can be updated in real time. Further, the group status of the fork child process is kept consistent with the group status of the parent process of the fork child process, thereby facilitating resource sharing between the fork child process and the parent process.

Specifically, step 424 may include: updating, by using an AMS, a group status of a remaining process of the application other than the fork child process; and updating the group status of the fork child process based on the group status of the remaining process, so that the group status of the fork child process is kept consistent with the group status of the parent process of the fork child process.

It should be noted that, in this embodiment of this application, although an update of the group status of the fork child process needs to be based on an update of the group status of the remaining process other than the fork child process, in this embodiment, there is no limitation that group statuses of all remaining processes need to be updated before the group status of the fork child process is updated. The group statuses of all the remaining processes may be updated before the group status of the fork child process is updated, or the two updates may be performed in a cross manner. For example, assuming that the application includes a process 1, a process 2, a process 3, and a process 4, the process 3 and the process 4 are identified fork child processes, the process 1 is a parent process of the process 3, and the process 2 is a parent process of the process 4, the process 1 and the process 2 are remaining processes other than the fork child processes. A feasible update manner is: first updating group statuses of the process 1 and the process 2 based on the AMS, and then updating group statuses of the process 3 and the process 4, so that the group statuses of the process 3 and the process 4 are respectively kept consistent with the group statuses of the process 1 and the process 2. Another feasible update manner is: first updating a group status of the process 1 based on the AMS, and then updating a group status of the process 3, so that the group status of the process 3 is kept consistent with the group status of the process 1; and first updating a group status of the process 2 based on the AMS, and then updating a group status of the process 4, so that the group status of the process 4 is kept consistent with the group status of the process 2.

Further, in some embodiments, if a parent process of a fork child process (hereinafter referred to as a first fork child process) is also a fork child process (hereinafter referred to as a second fork child process), and a parent process of the second fork child process is a process controlled by the AMS, a group status of the parent process of the second fork child process may be first updated based on the AMS; a group status of the second fork child process is updated, so that the group status of the second fork child process is kept consistent with the group status of the parent process of the second fork child process; and then a group status of the first fork child process is updated, so that the group status of the first fork child process is kept consistent with the group status of the second fork child process.

Further, there are a plurality of manners of keeping the group status of the fork child process consistent with the group status of the parent process of the fork child process. For example, a setProcessGroup function may be called to adjust a process group of the fork child process, so that the process group of the fork child process is kept consistent with a process group of the parent process of the fork child process.

It should be understood that there may be a plurality of implementations of step 422. Optionally, in an implementation, the fork child process of the process of the application may be recorded in advance. For example, a fork child process record table may be created in advance, and each time the application obtains a child process through forking, a process identifier of the child process is recorded in the record table. When the child process needs to be used, the record table may be searched to identify the fork child process.

Optionally, in another implementation, step 422 may include: searching cgroup.procs files of the plurality of processes for the fork child process, where the cgroup.procs files of the plurality of processes record a process identifier of the fork child process.

Specifically, a cgroup.procs file is a file type supported by a cgroup mechanism. One process is corresponding to one cgroup.procs file. The cgroup.procs file records a process identifier of the process, and a process identifier of a fork child process of the process. The cgroup.procs file corresponding to the process is usually located in the following file path: /acct/uid_xxx/pid_ xxx/cgroup.procs, where uid_xxx indicates a user identifier of the application, and pid xxx indicates the process identifier of the process.

It is assumed that the application includes a process 1, a process 2, a process 3, and a process 4. A cgroup.procs file of the process 1 records a process identifier of the process 1 and a process identifier of the process 3, and therefore the process 3 is a fork child process of the process 1. A cgroup.procs file of the process 2 records a process identifier of the process 2, and therefore the process 2 has no fork child process. A cgroup.procs file of the process 3 records a process identifier of the process 3 and a process identifier of the process 4, and therefore the process 4 is a fork child process of the process 3. A cgroup.procs file of the process 4 records an identifier of the process 4, and therefore the process 4 has no fork child process. It can be learned from the above that fork child processes found from the cgroup.procs files of the four processes are the process 3 and the process 4.

It should be noted that not all processes of the application have fork child processes. Therefore, to simplify implementation, step 422 may be performed in the following manner: querying for a quantity of processes recorded in a cgroup.procs file of a process, where if the quantity of processes is greater than 1, it indicates that the process has a fork child process, or if the quantity of processes is 1, it indicates that the process has no fork child process; and continuing to query a cgroup.procs file of a next process, until cgroup.procs files of all processes are queried.

In some embodiments, paths to the cgroup.procs files of the plurality of processes of the application may be first determined, and then the cgroup.procs files are searched for the fork child process of the process of the application. Specifically, the paths to the cgroup.procs files of the plurality of processes of the application may be obtained in the following manner: determining a user identifier of the application based on a process identifier of a main process of the application; querying for process identifiers of the plurality of processes based on the user identifier of the application; and determining the paths to the cgroup.procs files of the plurality of processes based on the user identifier of the application and the process identifiers of the plurality of processes.

Specifically, each application has a user identifier (uid), used to uniquely identify the application. There are a plurality of manners of obtaining the user identifier of the application. For example, the user identifier of the application may be determined by querying configuration information of the application. For another example, the user identifier of the application may be determined based on the identifier of the main process of the application. For example, the user identifier of the application may be obtained by calling the following function: process.getUidForPid(pid_main), where pid main indicates the identifier of the main process of the application, and a result returned by the function is the user identifier of the application.

There may be a plurality of manners of obtaining the process identifiers of the plurality of processes of the application. For example, the user identifier uid xxx of the application may be first obtained, and then the process identifiers of the processes included in the application are found in a /acct/uid_xxx file. For another example, a process identifier record table of processes of the application may be created in advance. Each time the application generates a process, a process identifier of the process is recorded in the record table. When the process needs to be used, the process identifier of the process of the application may be obtained from the record table.

In some embodiments, considering a generation delay of the fork child process of the process of the application, a count and a count threshold may be preset. The count indicates a quantity of times of querying for the fork child process of the process of the application. When the event that the application switches from the foreground to the background occurs, if the count is less than the count threshold, a cgroup.procs file of the process of the application may be queried for the fork child process of the process of the application; or if the count is greater than or equal to the count threshold, it is considered that the fork child process of the application basically keeps unchanged, and a previous query result may be repeatedly used, to accelerate identifying of the fork child process.

In some embodiments, for ease of querying, the fork child process of the process of the application may be recorded in a form of a table.

For example, the table may be a comparison table in a key-value form. A key is the process identifier of the main process of the application, and a value is a process identifier list of fork child processes of processes of the application. For example, in Table 1, it is assumed that the application is an application A, the application A includes four processes, and process identifiers of the four processes are respectively 6726, 6752, 6763, and 8092, where 6726 is a process identifier of a main process, and 6752 and 6763 are process identifiers of fork child processes of processes of the application. Last two columns of Table 1 record a correspondence between the main process of the application and the fork child processes of the processes of the application in a key-value manner.

**Table 1**

| **Application name** | **Application process list** | **Main process** | **Target process list** |
|---|---|---|---|
| Application A | 6726 | 6726 | 6752 |
| | 6752 | | 6763 |
| | 6763 | | |
| | 8092 | | |

The foregoing mainly describes a manner of updating the group status of the fork child process of the process of the application when the event that the application switches from the foreground to the background occurs. Further, in some embodiments, when an event that the application switches from the background to the foreground occurs, the fork child process of the process of the application may be directly added to the foreground process group, or the group status of the fork child process of the process of the application is kept consistent with the group status of the parent process of the fork child process. A specific process is similar to a process in which the application switches from the foreground to the background. Details are not described herein.

Optionally, in some embodiments, the target process may include a process controlled by the AMS. The following describes in detail how to set at least some of such target processes to be in the background process group when the event that the application switches from the foreground to the background occurs.

From step 312 in FIG. 3A and FIG. 3B, it can be learned that, in the prior art, a group status of a to-be-grouped current process is updated based on a previous group of a current group of an associated process. A specific update manner is setting a current group of the current process to the previous group of the associated process. If the group status of the current process is updated in the manner in the prior art, the following problem is caused: Assuming that an application switches from the foreground to the background, a current group of a process of the application is updated. An update result may be a foreground process group, or may be a background process group. However, because the application is previously in the foreground, previous groups of current groups of all processes of the application are the foreground process group. In this case, if the processing manner in the prior art is used, regardless of whether the current group of the process of the application is updated to the foreground process group or the background process group, all processes associated with the process of the application stay in the foreground process group and contend for a resource with a foreground process, thereby causing system frame freezing.

In this embodiment of this application, the target process may include such a process that stays in the foreground process group due to an association relationship. To mitigate system frame freezing caused because this type of target process stays in the foreground, step 420 may be implemented in the following manner: determining an associated process of a to-be-grouped current process of the application; and adding the current process to the foreground process group when a current group of the associated process is the foreground process group; or adding the current process to the background process group when a current group of the associated process is the background process group.

It should be understood that the foregoing process may be performed in a process of updating the group status of the current process based on the AMS. Specifically, the to-be-grouped current process of the application is a process controlled by the AMS. When the event that the application switches from the foreground to the background occurs, the AMS control procedure shown in FIG. 3A and FIG. 3B is performed for the current process. The above-described determining that the current process of the application has an association relationship with another process of the terminal device may be implemented in step 311 in FIG. 3A and FIG. 3B. If step 311 is performed for the current process, it indicates that the current process currently belongs to the background process group. Next, step 312 is performed to update the group status of the current process based on the associated process. To avoid the above-described problem that processes of some background applications stay in the foreground process group due to an association relationship, in this embodiment of this application, logic of step 312 is modified as follows: Update the group status of the current process based on the current group of the associated process; and add the current process to the foreground process group when the current group of the associated process is the foreground process group; or add the current process to the background process group when the current group of the associated process is the background process group.

In this embodiment of this application, the group status of the current process is updated based on the current group of the associated process, so that after the application switches from the foreground to the background, there is also a possibility that the process associated with the process of the application enters the background process group.

From step 305 in FIG. 3A and FIG. 3B, it can be learned that, in the prior art, if the current process has a foreground service, the current process is added to the foreground process group. However, a service of a process is usually set to be in the foreground by using a startForeground function. In other words, if the startForeground function is excessively used, excessive processes of background applications stay in the foreground process group and contend for a resource with a foreground application.

In this embodiment of this application, the target process may include such a process that stays in the foreground process group due to possession of a foreground service. To mitigate system frame freezing caused because this type of target process stays in the foreground, step 420 may be implemented in the following manner: when a to-be-grouped current process of the application does not include an activity in a visible state or a paused state, updating a group status of the current process depending on whether the current process is forcibly set to be in the foreground; and adding the current process to the foreground process group if the current process is forcibly set to be in the foreground; or adding the current process to the background process group if the current process is not forcibly set to be in the foreground.

It should be understood that the foregoing process may be performed in a process of updating the group status of the current process based on the AMS. Specifically, it can be learned from FIG. 3A and FIG. 3B that, in the prior art, if the current process does not include an activity in a visible state or a paused state, step 305 needs to be performed, in other words, whether the current process has a foreground service needs to be determined. However, in this embodiment of this application, if the current process does not include an activity in a visible state or a paused state, step 306 is directly performed without performing step 305, in other words, the group status of the current process is updated depending on whether the current process is forcibly set to be in the foreground. This simplifies a process group update procedure of the AMS. In addition, the current process does not stay in the foreground process group even if the current process has a foreground service, thereby mitigating system frame freezing.

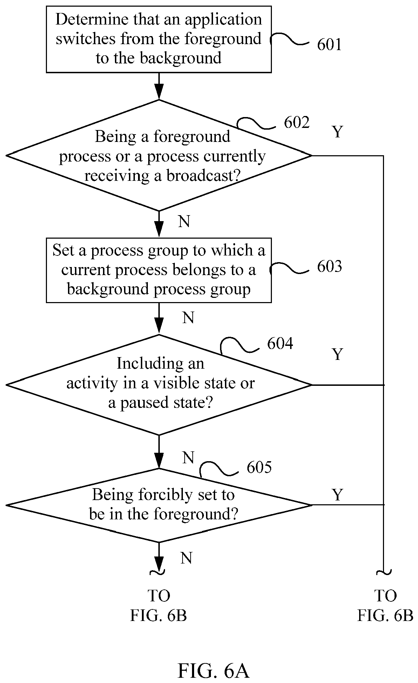

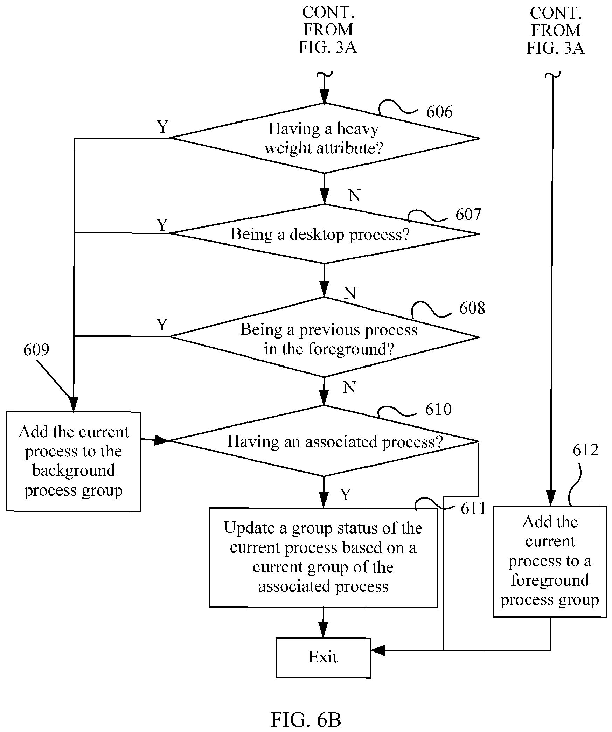

The following describes the embodiments of this application in a more detailed manner with reference to a specific example. It should be noted that an example in FIG. 6A and FIG. 6B is merely intended to help a person skilled in the art understand the embodiments of this application, but not intended to limit the embodiments of this application to a specific value or a specific scenario in the example. Obviously, a person skilled in the art may perform various equivalent modifications or variations based on the given example in FIG. 6A and FIG. 6B, and such modifications or variations shall also fall within the scope of the embodiments of this application.

FIG. 6A and FIG. 6B are a flowchart of an AMS control procedure according to an embodiment of this application.

601. Determine that an application switches from the foreground to the background.

602. Determine whether a current process is a foreground process or a process currently receiving a broadcast.

603. Set a process group to which the current process belongs to a background process group.

604. Determine whether the current process includes an activity in a visible state or a paused state.

Step 601 to step 604 are similar to step 301 to step 304 in FIG. 3A and FIG. 3B. For details, refer to the descriptions of FIG. 3A and FIG. 3B. Details are not described herein.

605. Determine whether the current process is forcibly set to be in the foreground.

By comparing FIG. 6A and FIG. 6B with FIG. 3A and FIG. 3B, it can be learned that, in the embodiment of FIG. 6A and FIG. 6B, when the current process does not include an activity in a visible state or a paused state, a group status of the current process is directly updated depending on whether the current process is forcibly set to be in the foreground, without determining whether the current process has a foreground service. This can prevent a process having a foreground service from staying in the foreground and contending for a resource with a foreground application.

606. Determine whether the current process has a heavy weight attribute.

607. Determine whether the current process is a desktop process.

608. Determine whether the current process is a process of a previous application in the foreground.

609. Add the current process to the background process group.

610. Determine whether the current process has an associated process.

Step 606 to step 610 are similar to step 307 to step 311 in FIG. 3A and FIG. 3B. For details, refer to the descriptions of FIG. 3A and FIG. 3B. Details are not described herein.

611. Update a group status of the current process based on a current group of the associated process.

This step is corresponding to step 312 in FIG. 3A and FIG. 3B. In step 312, the group status of the current process is updated based on the previous group of the associated process. Different from step 312, in step 611, the group status of the current process is updated based on the current group of the associated process. Specifically, the current process is added to a foreground process group when the current group of the associated process is the foreground process group; or the current process is added to the background process group when the current group of the associated process is the background process group.

In the prior art described in FIG. 3A and FIG. 3B, the group status of the current process is updated based on the previous group of the current group of the associated process. A specific update manner is setting a current group of the current process to the previous group of the associated process. If the group status of the current process is updated in the manner in the prior art, the following problem is caused: Assuming that an application switches from the foreground to the background, a current group of a process of the application is updated. An update result may be a foreground process group, or may be a background process group. However, because the application is previously in the foreground, previous groups of current groups of all processes of the application are the foreground process group. In this case, if the processing manner in the prior art is used, regardless of whether the current group of the process of the application is updated to the foreground process group or the background process group, all processes associated with the process of the application stay in the foreground process group. In this embodiment of this application, the group status of the current process is updated based on the current group of the associated process. This can avoid the foregoing problem, so that even though the application switches from the foreground to the background, there is also a possibility that the process associated with the process of the application enters the background process group.

612. Add the current process to a foreground process group.

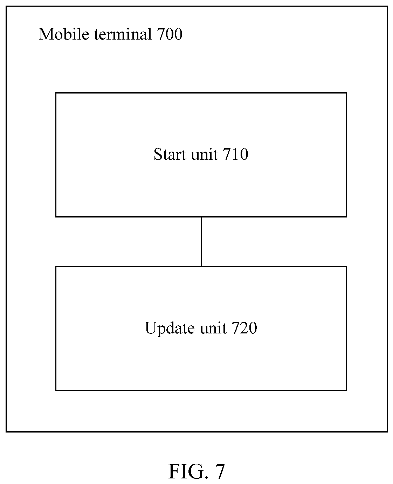

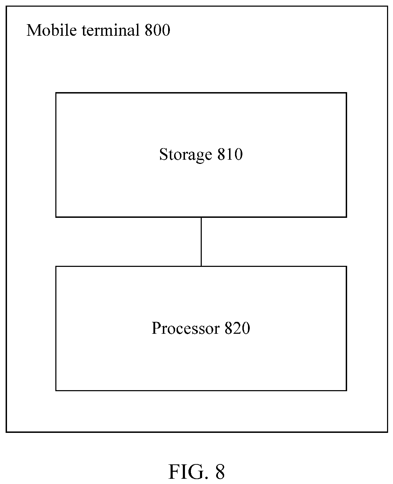

The foregoing describes in detail the method embodiments of this application with reference to FIG. 1 to FIG. 6A and FIG. 6B. The following describes in detail apparatus embodiments of this application with reference to FIG. 7 and FIG. 8. The apparatus embodiments are corresponding to the method embodiments. For a part that is not described in detail, refer to the method embodiments.

FIG. 7 is a schematic structural diagram of a terminal device according to an embodiment of this application. The terminal device 700 in FIG. 7 includes:
a start unit 710, configured to start an application on the terminal device; and
an update unit 720, configured to update a group status of a process of the application when an event that the application switches from the foreground to the background occurs, so that at least some of target processes of the application are transferred from a foreground process group to a background process group, where the target process is a process that still meets, after the application switches to the background, a condition for staying in the foreground process group.

The target process is the process that still meets, after the application switches to the background, the condition for staying in the foreground process group. If the prior art is used, the target process stays in the foreground process group and contends for a resource with a foreground process. In this embodiment of this application, the group status of the process of the application is updated when the event that the application switches from the foreground to the background occurs, so that the at least some of the target processes of the application are transferred from the foreground process group to the background process group. This can reduce, to some extent, a quantity of processes that contend for a resource with a foreground process, thereby mitigating system frame freezing.

Optionally, in an embodiment, the target process includes at least one of the following processes: a fork child process of the process of the application; a process having an associated process, where a previous group of a current group of the associated process is the foreground process group; and a process that is forcibly set to be in the foreground.

Optionally, in an embodiment, the target process includes the fork child process of the process of the application, and the update unit 720 is specifically configured to: identify the fork child process from a plurality of processes of the application; and update a group status of the fork child process, so that the group status of the fork child process is kept consistent with a group status of a parent process of the fork child process.

Optionally, in an embodiment, the update unit 720 is specifically configured to search cgroup.procs files of the plurality of processes for the fork child process, where the cgroup.procs files of the plurality of processes record a process identifier of the fork child process.

Optionally, in an embodiment, the terminal device further includes: a first determining unit, configured to determine a user identifier of the application based on a process identifier of a main process of the application; a query unit, configured to query for process identifiers of the plurality of processes based on the user identifier of the application; and a second determining unit, configured to determine paths to the cgroup.procs files of the plurality of processes based on the user identifier of the application and the process identifiers of the plurality of processes.

Optionally, in an embodiment, the update unit 720 is specifically configured to: determine an associated process of a to-be-grouped current process of the application; and add the current process to the foreground process group when a current group of the associated process is the foreground process group; or add the current process to the background process group when a current group of the associated process is the background process group.

Optionally, in an embodiment, the update unit 720 is specifically configured to: when a to-be-grouped current process of the application does not include an activity in a visible state or a paused state, update a group status of the current process depending on whether the current process is forcibly set to be in the foreground; and add the current process to the foreground process group if the current process is forcibly set to be in the foreground; or add the current process to the background process group if the current process is not forcibly set to be in the foreground.

FIG. 8 is a schematic structural diagram of a terminal device according to an embodiment of this application. The terminal device 800 in FIG. 8 includes:
a storage 810, configured to store a program; and
a processor 820, configured to execute the program stored in the storage 810, where when the program is executed, the processor 820 is configured to: start an application on the terminal device; and update a group status of a process of the application when an event that the application switches from the foreground to the background occurs, so that at least some of target processes of the application are transferred from a foreground process group to a background process group, where the target process is a process that still meets, after the application switches to the background, a condition for staying in the foreground process group.

The target process is the process that still meets, after the application switches to the background, the condition for staying in the foreground process group. If the prior art is used, the target process stays in the foreground process group and contends for a resource with a foreground process. In this embodiment of this application, the group status of the process of the application is updated when the event that the application switches from the foreground to the background occurs, so that the at least some of the target processes of the application are transferred from the foreground process group to the background process group. This can reduce, to some extent, a quantity of processes that contend for a resource with a foreground process, thereby mitigating system frame freezing.

Optionally, in an embodiment, the target process includes at least one of the following processes: a fork child process of the process of the application; a process having an associated process, where a previous group of a current group of the associated process is the foreground process group; and a process that is forcibly set to be in the foreground.

Optionally, in an embodiment, the target process includes the fork child process of the process of the application, and the processor 820 is specifically configured to: identify the fork child process from a plurality of processes of the application; and update a group status of the fork child process, so that the group status of the fork child process is kept consistent with a group status of a parent process of the fork child process.

Optionally, in an embodiment, the processor 820 is specifically configured to search cgroup.procs files of the plurality of processes for the fork child process, where the cgroup.procs files of the plurality of processes record a process identifier of the fork child process.

Optionally, in an embodiment, the processor 820 is further configured to: determine a user identifier of the application based on a process identifier of a main process of the application; query for process identifiers of the plurality of processes based on the user identifier of the application; and determine paths to the cgroup.procs files of the plurality of processes based on the user identifier of the application and the process identifiers of the plurality of processes.

Optionally, in an embodiment, the processor 820 is specifically configured to: determine an associated process of a to-be-grouped current process of the application; and add the current process to the foreground process group when a current group of the associated process is the foreground process group; or add the current process to the background process group when a current group of the associated process is the background process group.

Optionally, in an embodiment, the processor 820 is specifically configured to: when a to-be-grouped current process of the application does not include an activity in a visible state or a paused state, update a group status of the current process depending on whether the current process is forcibly set to be in the foreground; and add the current process to the foreground process group if the current process is forcibly set to be in the foreground; or add the current process to the background process group if the current process is not forcibly set to be in the foreground.

A person of ordinary skill in the art may be aware that, in combination with the examples described in the embodiments disclosed in this specification, units and algorithm steps can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in this application, it should be understood that the disclosed system, apparatus, and method may be implemented in other manners. For example, the described apparatus embodiments are merely examples. For example, the unit division is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electrical, mechanical, or other forms.

The units described as separate parts may or may not be physically separate, and parts shown as units may or may not be physical units, in other words, may be located in one position, or may be distributed on a plurality of network units. Some or all of the units may be selected based on actual requirements to achieve the objectives of the solutions of the embodiments.

In addition, functional units in the embodiments of this application may be integrated into one processing unit, or each of the units may exist alone physically, or two or more units may be integrated into one unit.

When the functions are implemented in a form of a software functional unit and sold or used as an independent product, the functions may be stored in a computer readable storage medium. Based on such an understanding, the technical solutions of this application essentially, or the part contributing to the prior art, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in the embodiments of this application. The storage medium includes any medium that can store program code, such as a USB flash drive, a removable hard disk, a read-only memory (Read-Only Memory, ROM), a random access memory (Random Access Memory, RAM), a magnetic disk, or an optical disc.

## Claims

1. An application process management method, comprising:
starting an application on a terminal device; and
updating a group status of a process of the application when an event that the application switches from the foreground to the background occurs, so that at least some of target processes of the application are transferred from a foreground process group to a background process group, wherein the target process is a process that still meets, after the application switches to the background, a condition for staying in the foreground process group.

2. The method according to claim 1, wherein the target process comprises at least one of the following processes:
a fork child process of the process of the application;
a process having an associated process, wherein a previous group of a current group of the associated process is the foreground process group; and
a process that is forcibly set to be in the foreground.

3. The method according to claim 1 or 2, wherein the target process comprises the fork child process of the process of the application; and
the updating a group status of a process of the application comprises:
identifying the fork child process from a plurality of processes of the application; and
updating a group status of the fork child process, so that the group status of the fork child process is kept consistent with a group status of a parent process of the fork child process.

4. The method according to claim 3, wherein the identifying the fork child process from a plurality of processes of the application comprises:
searching cgroup.procs files of the plurality of processes for the fork child process, wherein the cgroup.procs files of the plurality of processes record a process identifier of the fork child process.

5. The method according to claim 4, wherein before the searching cgroup.procs files of the plurality of processes for the fork child process, the method further comprises:
determining a user identifier of the application based on a process identifier of a main process of the application;
querying for process identifiers of the plurality of processes based on the user identifier of the application; and
determining paths to the cgroup.procs files of the plurality of processes based on the user identifier of the application and the process identifiers of the plurality of processes.

6. The method according to claim 1 or 2, wherein the updating a group status of a process of the application comprises:
determining an associated process of a to-be-grouped current process of the application; and
adding the current process to the foreground process group when a current group of the associated process is the foreground process group; or
adding the current process to the background process group when a current group of the associated process is the background process group.

7. The method according to claim 1 or 2, wherein the updating a group status of a process of the application comprises:
when a to-be-grouped current process of the application does not comprise an activity in a visible state or a paused state, updating a group status of the current process depending on whether the current process is forcibly set to be in the foreground; and
adding the current process to the foreground process group if the current process is forcibly set to be in the foreground; or
adding the current process to the background process group if the current process is not forcibly set to be in the foreground.

8. A terminal device, comprising:
a start unit, configured to start an application on the terminal device; and
an update unit, configured to update a group status of a process of the application when an event that the application switches from the foreground to the background occurs, so that at least some of target processes of the application are transferred from a foreground process group to a background process group, wherein the target process is a process that still meets, after the application switches to the background, a condition for staying in the foreground process group.

9. The terminal device according to claim 8, wherein the target process comprises at least one of the following processes:
a fork child process of the process of the application;
a process having an associated process, wherein a previous group of a current group of the associated process is the foreground process group; and
a process that is forcibly set to be in the foreground.

10. The terminal device according to claim 8 or 9, wherein the target process comprises the fork child process of the process of the application; and
the update unit is specifically configured to: identify the fork child process from a plurality of processes of the application; and update a group status of the fork child process, so that the group status of the fork child process is kept consistent with a group status of a parent process of the fork child process.

11. The terminal device according to claim 10, wherein the update unit is specifically configured to search cgroup.procs files of the plurality of processes for the fork child process, wherein the cgroup.procs files of the plurality of processes record a process identifier of the fork child process.

12. The terminal device according to claim 11, wherein the terminal device further comprises:
a first determining unit, configured to determine a user identifier of the application based on a process identifier of a main process of the application;
a query unit, configured to query for process identifiers of the plurality of processes based on the user identifier of the application; and
a second determining unit, configured to determine paths to the cgroup.procs files of the plurality of processes based on the user identifier of the application and the process identifiers of the plurality of processes.

13. The terminal device according to claim 8 or 9, wherein the update unit is specifically configured to: determine an associated process of a to-be-grouped current process of the application; and add the current process to the foreground process group when a current group of the associated process is the foreground process group; or add the current process to the background process group when a current group of the associated process is the background process group.

14. The terminal device according to claim 8 or 9, wherein the update unit is specifically configured to: when a to-be-grouped current process of the application does not comprise an activity in a visible state or a paused state, update a group status of the current process depending on whether the current process is forcibly set to be in the foreground; and add the current process to the foreground process group if the current process is forcibly set to be in the foreground; or add the current process to the background process group if the current process is not forcibly set to be in the foreground.
